# EUROPEAN PATENT SPECIFICATION

(11) **EP 3 378 716 B1**
(45) Date of publication and mention of the grant of the patent: **04.08.2021**
(21) Application number: 17820250.3
(22) Date of filing: 29.06.2017
(51) Int. Cl.: B60T 8/17, B60T 8/26

(54) **SADDLE-TYPE VEHICLE**
SATTELFAHRZEUG
VÉHICULE DE TYPE À SELLE

(30) Priority: 29.06.2016 JP 2016129263; 22.07.2016 JP 2016144421; 22.07.2016 JP 2016144440; 31.10.2016 JP 2016213121
(43) Date of publication of application: 26.09.2018
(73) Proprietor: Yamaha Hatsudoki Kabushiki Kaisha, Iwata-shi, Shizuoka 438-8501 (JP); Advics Co., Ltd., Kariya-shi, Aichi 448-8688 (JP)
(72) Inventor: KASAI, Satoshi, Iwata-shi Shizuoka 438-8501 (JP); MIZUTANI, Takaaki, Iwata-shi Shizuoka 438-8501 (JP); FUKUDA, Tadashi, Iwata-shi Shizuoka 438-8501 (JP); SEKI, Yoshimichi, Iwata-shi Shizuoka 438-8501 (JP); HIGUCHI, Shoma, Iwata-shi Shizuoka 438-8501 (JP); TERASAKA, Masato, Kariya-shi Aichi 448-8688 (JP); USHIROZAKO, Shinji, Kariya-shi Aichi 448-8688 (JP)
(74) Representative: Stöckeler, Ferdinand
(86) International application number: PCT/JP2017/023848
(87) International publication number: WO 2018/003896

(56) References cited:
- EP-A1- 1 826 443
- EP-A1- 2 487 080
- EP-A1- 2 977 281
- EP-A2- 1 566 540
- EP-A2- 2 305 525
- JP-A- H03 132 455
- JP-A- 2011 105 289
- JP-A- 2011 194 994
- JP-A- 2015 182 685
- US-A1- 2007 075 582

## Description

### TECHNICAL FIELD

The present invention relates to a straddled vehicle.

### BACKGROUND ART

Patent Documents 1 and 2, listed below, each disclose a braking apparatus for a straddled vehicle, such as a motorcycle, that provides a lever operation feel accompanied by a rigidity feel.

Patent Document 1 discloses a master cylinder device attached to the bar handle. This master cylinder device includes a cylinder body defining a cylinder bore and a piston. A bracket half, integral with the cylinder body, and a separate split bracket are positioned to sandwich the handle bar. The bracket half and the split bracket are fastened together by two bolts. An operation lever is rotatably supported by a lever bracket integral with the cylinder body. The vehicle-body front-rear direction line, which extends along the central axis of the two bolts, is offset toward the grip of the bar handle relative to the central axis of the cylinder bore. This efficiently prevents bending deformation of the cylinder body that is caused by a lever operation. This provides a lever operation feel accompanied by a rigidity feel.

Patent Document 2 discloses a separate-type caliper body for a vehicle disc brake. This caliper body includes a pair of separate pieces. A disc rotor is positioned between the pair of separate pieces. The pair of separate pieces are connected together, where their joining surfaces abut each other. Each joining surface is divided into three sections: a disc entry section, a disc exit section and a middle section. Each of the pair of separate pieces defines a cylinder bore for the disc entry section and a cylinder bore for the disc exit section. A piston is inserted into each cylinder bore. The piston for the disc entry section and the piston for the disc exit section are actuated by two separate hydraulic systems. The diameter of the piston for the disc exit section is larger than the diameter of the piston for the disc entry section. Further, the area of the disc exit section of the joining surface is larger than the area of the disc entry section of the joining surface. The area of the middle section of the joining surface is larger than the area of the disc entry section of the joining surface. This provides the braking operation element for the brake system for disc exit with an operation feel accompanied by a rigidity feel similar to that of the brake system for disc entry.

EP 2 487 080 A1 discloses a brake system capable of realizing a front-rear distribution of braking force according to variations in the running environments. A first control mode and a second control mode are provided by which it is possible to cope with variations in the running environments such as changes between traveling on a public road and traveling on a circuit racecourse and variations in road conditions such as changes between a dry road surface and a wet road surface. A mode change-over switch is disposed between a kill switch on the upper side and a starter switch on the lower side, on the vehicle body center side relative to a right grip. Switching between the first control mode and the second control mode is carried out by use of the mode change-over switch.

### PRIOR ART DOCUMENTS

### PATENT DOCUMENTS

Patent Document 1: Japanese Patent No. 4086521
Patent Document 2: Japanese Patent No. 3507973

### SUMMARY OF THE INVENTION

### PROBLEMS TO BE SOLVED BY THE INVENTION

In a straddled vehicle such as a motorcycle, it is desirable that the rigidity feel accompanied by an operation of a braking operation element be capable of being adjusted in a simpler manner. In view of this, an object of the present invention is to provide a straddled vehicle including a front-wheel braking operation element, a rear-wheel braking operation element, and a braking apparatus that allows the rigidity feel accompanied by an operation of the front-wheel braking operation element or rear-wheel braking operation element to be adjusted in a simpler manner based on a technical idea different from those of conventional art.

### MEANS FOR SOLVING THE PROBLEMS

Typically, a straddled vehicle includes a front-wheel braking operation element and a rear-wheel braking operation element. One may operate the front-wheel braking operation element to generate a braking force for the front wheel. Similarly, one may operate the rear-wheel braking operation element to generate a braking force for the rear wheel. Thus, the straddled vehicle includes a plurality of braking operation elements, where these braking operation elements may be operated to generate a braking force for the front wheel and a braking force for the rear wheel just as the rider desires.

However, if a rigidity feel is created by improving parts, as conventionally proposed, changing and adjusting the rigidity feel will be complicated, as it requires replacing parts, for example.

In view of this, the present inventors did research into the rigidity feel of a braking operation element of a braking apparatus in a straddled vehicle including a plurality of braking operation elements.

During the research, the inventors found that one important factor contributing to a change in the rigidity in a braking apparatus in a straddled vehicle including a plurality of braking operation elements is the bending deformation of a part. Further, while continuing research using various conditions, the present inventors found that the bending deformation of a part in a braking apparatus in a straddled vehicle including front-wheel and rear-wheel braking operation elements significantly varies depending on brake hydraulic pressure.

At this point, the inventors departed from the technical idea of improving the rigidity of parts, and considered changing the rigidity feel of the front-wheel or rear-wheel braking operation element without changing the rigidity of parts. They investigated into the rigidity feel in an arrangement where a front-wheel brake fluid channel located between a front-wheel master cylinder and a front-wheel wheel cylinder is independent from a rear-wheel brake fluid channel located between a rear-wheel master cylinder and a rear-wheel wheel cylinder. During this, they considered an arrangement where a front-wheel electric actuator is provided on the front-wheel brake fluid channel for controlling the brake hydraulic pressure acting on the front-wheel wheel cylinder. The front-wheel electric actuator is driven by drive signals. A drive signal is generated based on the operation condition of the front-wheel braking operation element. During this investigation, the inventors found that the rigidity feel changes if the correlation between the operation condition of the front-wheel braking operation element and the drive signal for the front-wheel electric actuator is changed. Further, they found that, if the correlation can be changed by a person from the outside, the rigidity feel can change, thereby changing the operation feel of the braking operation element.

Based on these findings, the present inventors arrived at an arrangement in a braking apparatus for a straddled vehicle including a plurality of braking operation elements where the relationship of the brake hydraulic pressure acting on the wheel cylinder with the operation of a braking operation element is adjustable from the outside.

### (Arrangement 1)

A straddled vehicle according to Arrangement 1 of the present invention includes a vehicle-body frame and a front wheel and a rear wheel supported by the vehicle-body frame. The straddled vehicle includes a front-wheel brake, a front-wheel braking operation element, a front-wheel master cylinder, and a front-wheel brake fluid channel. The front-wheel brake is provided on the front wheel and includes a front-wheel wheel cylinder for generating a braking force for the front wheel. The front-wheel braking operation element is operable by a rider. The front-wheel master cylinder is actuated by an operation of the front-wheel braking operation element. The front-wheel brake fluid channel connects the front-wheel master cylinder with the front-wheel wheel cylinder. The straddled vehicle includes a rear-wheel brake, a rear-wheel braking operation element, a rear-wheel master cylinder, and a rear-wheel brake fluid channel. The rear-wheel brake is provided on the rear wheel and includes a rear-wheel wheel cylinder for generating a braking force for the rear wheel. The rear-wheel braking operation element is operable by the rider. The rear-wheel master cylinder is actuated by an operation of the rear-wheel braking operation element. The rear-wheel brake fluid channel connects the rear-wheel master cylinder with the rear-wheel wheel cylinder.

The straddled vehicle includes an external input unit, an operation device operable by a person being connectable to the external input unit. The straddled vehicle includes at least one of the front-wheel brake hydraulic-pressure control device and a rear-wheel brake hydraulic-pressure control device. The front-wheel brake fluid channel is independent from the rear-wheel brake fluid channel.

The front-wheel brake hydraulic-pressure control device includes a front-wheel electric actuator, a front-wheel braking operation condition detection unit, and a front-wheel drive signal generation unit. The front-wheel electric actuator is driven electrically. The front-wheel electric actuator is provided on the front-wheel brake fluid channel and controls a brake hydraulic pressure acting on the front-wheel wheel cylinder. The front-wheel braking operation condition detection unit detects an operation condition of the front-wheel braking operation element. The front-wheel drive signal generation unit defines a correlation between the operation condition of the front-wheel braking operation element and a drive signal for the front-wheel electric actuator and, based on the operation condition of the front-wheel braking operation element detected by the front-wheel braking operation condition detection unit, generates a drive signal for driving the front-wheel electric actuator. The front-wheel drive signal generation unit includes a front-wheel correlation changing unit. Based on a signal received by the external input unit from the operation device connected to the external input unit, the front-wheel correlation changing unit changes the correlation between the operation condition of the front-wheel braking operation element and the drive signal for the front-wheel electric actuator.

The rear-wheel brake hydraulic-pressure control device includes a rear-wheel electric actuator, a rear-wheel braking operation condition detection unit, and a rear-wheel drive signal generation unit. The rear-wheel electric actuator is driven electrically. The rear-wheel electric actuator is provided on the rear-wheel brake fluid channel and controls a brake hydraulic pressure acting on the rear-wheel wheel cylinder. The rear-wheel braking operation condition detection unit detects the operation condition of the rear-wheel braking operation element. The rear-wheel drive signal generation unit defines a correlation between the operation condition of the rear-wheel braking operation element and a drive signal for the rear-wheel electric actuator and, based on the operation condition of the rear-wheel braking operation element detected by the rear-wheel braking operation condition detection unit, generates a drive signal for driving the rear-wheel electric actuator. The rear-wheel drive signal generation unit includes a rear-wheel correlation changing unit. Based on a signal received by the external input unit from the operation device connected to the external input unit, the rear-wheel correlation changing unit changes the correlation between the operation condition of the rear-wheel braking operation element and the drive signal for the rear-wheel electric actuator.

That is, the straddled vehicle includes a brake hydraulic-pressure control device capable of controlling the brake hydraulic pressure acting on one wheel cylinder that is actuated when one of the front-wheel and rear-wheel braking operation elements is operated. One brake fluid channel to which the one wheel cylinder is connected is independent from the other brake fluid channel. The brake hydraulic-pressure control device includes an electric actuator, one braking operation condition detection unit, and a drive signal generation unit. The electric actuator is driven electrically. The electric actuator is provided on the one brake fluid channel and is capable of controlling the brake hydraulic pressure acting on the one wheel cylinder. The one braking operation condition detection unit detects the operation condition of the one braking operation element. The drive signal generation unit defines the relationship between the operation condition of the one braking operation element and the drive signal for the electric actuator and, depending on the operation condition of the one braking operation element detected by the one braking operation condition detection unit, generates a drive signal for driving the electric actuator. Depending on the signal received by the external input unit from the outside, the drive signal generation unit is configured to be capable of changing the relationship between the operation condition of the one braking operation element and the drive signal for the electric actuator.

In Arrangement 1, a person may operate the operation device to change the relationship between the operation condition of the braking operation element and the drive signal for the electric actuator via an external input unit. This allows the relationship of the brake hydraulic pressure acting on the wheel cylinder with the operation of the braking operation element to be adjusted from the outside. This provides a straddled vehicle including a front-wheel braking operation element, a rear-wheel braking operation element and a braking apparatus that allows the rigidity feel accompanied by an operation of the front-wheel braking operation element or rear-wheel braking operation element to be adjusted in a simpler manner based on a technical idea different from those of conventional art.

### (Arrangement 2)

Starting from Arrangement 1, the operation device may be connected to the external input unit and provided on the straddled vehicle. In such implementations, the front-wheel correlation changing unit may change the correlation between the operation condition of the front-wheel braking operation element and the drive signal for the front-wheel electric actuator based on the signal received by the external input unit from the operation device, the signal being based on the operation of the operation device by the rider. The rear-wheel correlation changing unit may change the correlation between the operation condition of the rear-wheel braking operation element and the drive signal for the rear-wheel electric actuator based on the signal received by the external input unit from the operation device, the signal being based on the operation of the operation device by the rider.

That is, starting from Arrangement 1, the operation device may be provided on the straddled vehicle and be operable by the rider. The operation device is connected to the external input unit. The drive signal generation unit may be configured to be capable of changing the relationship between the operation condition of the one braking operation element and the drive signal for the electric actuator depending on the operation of the operation device.

### (Arrangement 3)

Starting from Arrangement 1, with the operation device being connected to the external input unit, the front-wheel correlation changing unit may change the relationship between the operation condition of the front-wheel braking operation element and the drive signal for the front-wheel electric actuator based on the operation of the operation device. In such implementations, with the operation device not being connected to the external input unit, the front-wheel drive signal generation unit may generate the drive signal for driving the front-wheel electric actuator depending on the operation condition of the one braking operation element detected by the front-wheel braking operation condition detection unit based on the correlation changed by the front-wheel correlation changing unit. Or, starting from Arrangement 1, with the operation device being connected to the external input unit, the rear-wheel correlation changing unit may change the correlation between the operation condition of the rear-wheel braking operation element and the drive signal for the rear-wheel electric actuator based on the operation of the operation device. In such implementations, with the operation device not being connected to the external input unit, the rear-wheel drive signal generation unit may generate the drive signal for driving the rear-wheel electric actuator depending on the operation condition of the one braking operation element detected by the rear-wheel braking operation condition detection unit based on the correlation changed by the rear-wheel correlation changing unit.

That is, starting from Arrangement 1, with the operation device being connected to the external input unit, the brake hydraulic-pressure control device may be configured such that the drive signal generation unit is capable of changing the relationship between the operation condition of the one braking operation element and the drive signal of the electric actuator depending on the operation of the operation device. In such implementations, with the operation device not being connected to the external input unit, a drive signal for driving the electric actuator may be generated depending on the operation condition of the one braking operation element detected by the one braking operation condition detection unit based on the changed relationship between the operation condition of the one braking operation element and the drive signal of the electric actuator.

### (Arrangement 4)

Starting from one of Arrangements 1 to 3, the front-wheel braking operation condition detection unit may detect a front-wheel master-cylinder brake hydraulic pressure generated in the front-wheel master cylinder actuated by the operation of the front-wheel braking operation element. The front-wheel drive signal generation unit may generate the drive signal for driving the front-wheel electric actuator based on the front-wheel master-cylinder brake hydraulic pressure detected by the front-wheel braking operation condition detection unit. Or, starting from one of Arrangements 1 to 3, the rear-wheel braking operation condition detection unit may detect a rear-wheel master-cylinder brake hydraulic pressure generated in the rear-wheel master cylinder actuated by the operation of the rear-wheel braking operation element. The rear-wheel drive signal generation unit may generate the drive signal for driving the rear-wheel electric actuator based on the rear-wheel master-cylinder brake hydraulic pressure detected by the rear-wheel braking operation condition detection unit.

That is, starting from one of Arrangements 1 to 3, in the brake hydraulic-pressure control device, the one braking operation condition detection unit may be one master-cylinder brake hydraulic pressure detection unit for detecting the brake hydraulic pressure generated by the one master cylinder actuated by the operation of the one braking operation element. Both the operation condition of the one braking operation element and the drive signal for the electric actuator, whose relationship is defined by the drive signal generation unit, may be associated with the brake hydraulic pressure.

### (Arrangement 5)

Starting from one of Arrangements 1 to 4, the front-wheel drive signal generation unit may generate the drive signal for driving the front-wheel electric actuator based on at least one of a vehicle-body velocity, a vehicle posture, or a wheel slip condition, and on the operation condition of the front-wheel braking operation element detected by the front-wheel braking operation condition detection unit. Or, starting from one of Arrangements 1 to 4, the rear-wheel drive signal generation unit may generate the drive signal for driving the rear-wheel electric actuator based on at least one of a vehicle-body velocity, a vehicle posture, or a wheel slip condition, and on the operation condition of the rear-wheel braking operation element detected by the rear-wheel braking operation condition detection unit.

That is, starting from one of Arrangements 1 to 3, the drive signal generation unit may define the relationship between the operation condition of the one braking operation element and the drive signal for the electric actuator based on the vehicle-body velocity, vehicle posture or wheel slip condition.

### (Arrangement 6)

Starting from one of Arrangements 1 to 5, the drive signal generation unit may define the correlation between the operation condition of the front-wheel braking operation element and the drive signal for the front-wheel electric actuator in such a manner that a brake hydraulic pressure acting on the front-wheel wheel cylinder when the front-wheel braking operation element has been operated by a predetermined operation amount while the straddled vehicle is stopped and the main switch is off is different from a brake hydraulic pressure acting on the front-wheel wheel cylinder when the front-wheel braking operation element has been operated by the predetermined operation amount while the straddled vehicle is travelling. Or, starting from one of Arrangements 1 to 5, the drive signal generation unit may define the correlation between the operation condition of the rear-wheel braking operation element and the drive signal for the rear-wheel electric actuator in such a manner that a brake hydraulic pressure acting on the rear-wheel wheel cylinder when the rear-wheel braking operation element has been operated by a predetermined operation amount while the straddled vehicle is stopped and the main switch is off is different from a brake hydraulic pressure acting on the rear-wheel wheel cylinder when the rear-wheel braking operation element has been operated by the predetermined operation amount while the straddled vehicle is travelling.

That is, in the brake hydraulic-pressure control device, the drive signal generation unit may define the relationship between the operation condition of the one braking operation element and the drive signal for the electric actuator in such a manner that the brake hydraulic pressure acting on the one wheel cylinder when the one braking operation element has been operated by a predetermined operation amount while at least the vehicle is stopped and the main switch is off is different from the brake hydraulic pressure acting on the one wheel cylinder when the one braking operation element has been operated by the predetermined operation amount while the vehicle is travelling.

### (Arrangement 7)

Starting from one of Arrangements 1 to 6, the straddled vehicle may include a handle, at least one of the front-wheel braking operation element and the rear-wheel braking operation element being supported on the handle, the handle being configured to be capable of changing a direction of the front-wheel. At least one of the front-wheel braking operation element and the rear-wheel braking operation element may be supported on the handle. For example, the one braking operation element may be supported on the handle. The handle may be a bar handle.

### EFFECTS OF THE INVENTION

The present invention will provide a straddled vehicle including a front-wheel braking operation element, a rear-wheel braking operation element and a braking apparatus that allows the rigidity feel accompanied by an operation of the front-wheel braking operation element or rear-wheel braking operation element to be adjusted in a simpler manner based on a technical idea different from those of conventional art.

### BRIEF DESCRIPTION OF THE DRAWINGS

[FIG. 1] FIG. 1 is a schematic side view of a motorcycle.
[FIG. 2] FIG. 2 schematically shows the construction of a brake system of Embodiment 1.
[FIG. 3A] FIG. 3A is a functional block diagram of the brake hydraulic-pressure control device for the front wheel.
[FIG. 3B] FIG. 3B is a functional block diagram of the brake hydraulic-pressure control device for the rear wheel.
[FIG. 4] FIG. 4 shows examples of changes in the magnitude of the drive signal for the electric actuator versus the operation amount of the braking operation element.
[FIG. 5] FIG. 5 shows a variation of the brake system.
[FIG. 6] FIG. 6 illustrates a straddled vehicle according to an embodiment.

### EMBODIMENTS FOR CARRYING OUT THE INVENTION

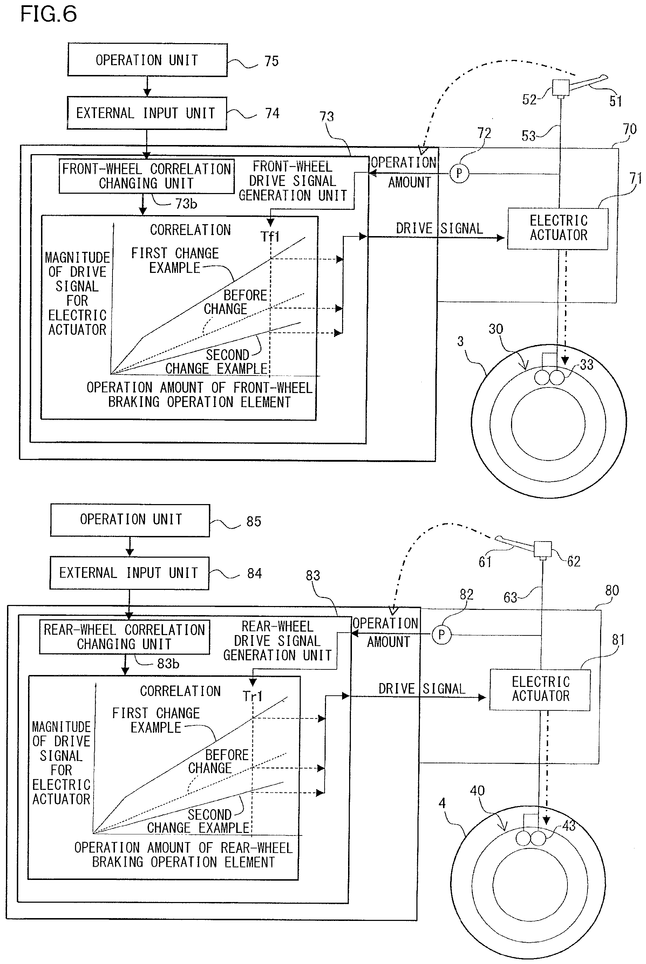

FIG. 6 illustrates a straddled vehicle according to an embodiment of the present invention. The straddled vehicle includes a vehicle-body frame, and a front wheel 3 and a rear wheel 4 supported on the vehicle-body frame. As shown in FIG. 6, the straddled vehicle includes a front-wheel brake 30 including a front-wheel wheel cylinder 33, a front-wheel braking operation element 51, a front-wheel master cylinder 52, and a front-wheel brake fluid channel 53. The front-wheel brake fluid channel 53 connects the front-wheel master cylinder 52 with the front-wheel wheel cylinder 33. The straddled vehicle further includes a rear-wheel brake 40 including a rear-wheel wheel cylinder 43, a rear-wheel braking operation element 61, a rear-wheel master cylinder 62, and a rear-wheel brake fluid channel 63. The rear-wheel brake fluid channel 63 connects the rear-wheel master cylinder 62 with the rear-wheel wheel cylinder 34. The front-wheel brake fluid channel 53 is independent from the rear-wheel brake fluid channel 63.

The straddled vehicle further includes external input units 74 and 84 to which operation devices 75 and 85 operable by a person may be connected. The straddled vehicle includes a front-wheel brake hydraulic-pressure control device 70 and a rear-wheel brake hydraulic-pressure control device 80. The front-wheel brake hydraulic-pressure control device 70 controls the brake hydraulic pressure acting on the front-wheel wheel cylinder 33 produced when the front-wheel braking operation element 51 has been operated. The rear-wheel brake hydraulic-pressure control device 80 controls the brake hydraulic pressure acting on the rear-wheel wheel cylinder 43 produced when the rear-wheel braking operation element 61 has been operated.

The front-wheel brake hydraulic-pressure control device 70 includes a front-wheel electric actuator 71, a front-wheel braking operation condition detection unit 72, and a front-wheel drive signal generation unit 73. The front-wheel electric actuator 71 is provided on the front-wheel brake fluid channel 53 and is driven electrically to control the brake hydraulic pressure acting on the front-wheel wheel cylinder 33. The front-wheel braking operation condition detection unit 72 detects the operation condition of the front-wheel braking operation element 51. The front-wheel braking operation condition detection unit 72 defines the correlation between the operation condition of the front-wheel braking operation element 51 and the drive signal for the front-wheel electric actuator 71 and, based on the operation condition of the front-wheel braking operation element 51 detected by the front-wheel braking operation condition detection unit 72, generates a drive signal for driving the front-wheel electric actuator 71. The front-wheel drive signal generation unit 73 includes a front-wheel correlation changing unit 73b. Based on a signal received by the external input unit 74 from the operation device 75 connected to the external input unit 74, the front-wheel correlation changing unit 73b changes the correlation between the operation condition of the front-wheel braking operation element 51 and the drive signal for the front-wheel electric actuator 71.

The rear-wheel brake hydraulic-pressure control device 80 includes a rear-wheel electric actuator 81, a rear-wheel braking operation condition detection unit 82, and a rear-wheel drive signal generation unit 83. The rear-wheel electric actuator 81 is provided on the rear-wheel brake fluid channel 63 and is driven electrically to control the brake hydraulic pressure acting on the rear-wheel wheel cylinder 43. The rear-wheel braking operation condition detection unit 82 detects the operation condition of the rear-wheel braking operation element 61. The rear-wheel drive signal generation unit 83 defines the correlation between the operation condition of the rear-wheel braking operation element 61 and the drive signal for the rear-wheel electric actuator 81 and, based on the operation condition of the rear-wheel braking operation element 61 detected by the rear-wheel braking operation condition detection unit 82, generates a drive signal for driving the rear-wheel electric actuator 81. The rear-wheel drive signal generation unit 83 includes a rear-wheel correlation changing unit 83b. Based on a signal received by the external input unit 84 from the operation device 85 connected to the external input unit 84, the rear-wheel correlation changing unit 83b changes the correlation between the operation condition of the rear-wheel braking operation element 61 and the drive signal for the rear-wheel electric actuator 81.

### (Embodiment 1)

Embodiment 1 of the present invention will now be described with reference to the drawings. A motorcycle will be described as an example of the straddled vehicle of Embodiment 1. However, the straddled vehicle of the present invention is not limited to a motorcycle, and any number of front and rear wheels may be provided. For example, a straddled vehicle with three or four wheels may be provided. In the following description, front/forward, rear(ward), left and right are directions with respect to the direction in which the motorcycle advances.

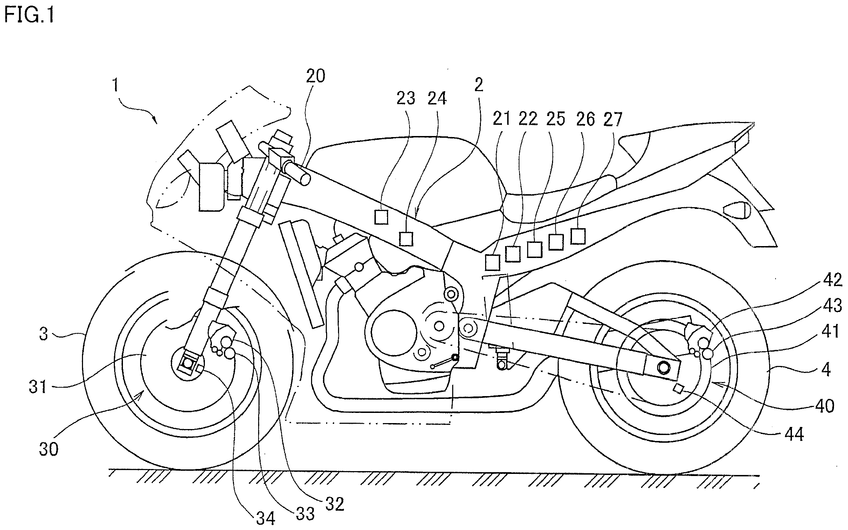

FIG. 1 is a schematic side view of the motorcycle. The motorcycle 1 includes a vehicle-body frame 2, a front wheel 3 and a rear wheel 4. The front wheel 3 is provided with a front-wheel brake 30 for generating a braking force for the front wheel 3. The rear wheel 4 is provided with a rear-wheel brake 40 for generating a braking force for the rear wheel 4. The front-wheel brake 30 is a disc brake generally composed of a front-wheel brake disc 31 and a front-wheel brake caliper 32. A front-wheel wheel cylinder 33 is provided on the front-wheel brake caliper 32. The rear-wheel brake 40 is a disc brake generally composed of a rear-wheel brake disc 41 and a rear-wheel brake caliper 42. A rear-wheel wheel cylinder 43 is provided on the rear-wheel brake caliper 42.

A handle 20 configured to be capable of changing the direction of the front wheel 3 is attached to the vehicle-body frame 2. The handle 20 is implemented using a bar handle. An electronic control unit (ECU) 21 is provided on the vehicle-body frame 2 for controlling the operation of various parts of the motorcycle 1. The front wheel 3 is provided with a front-wheel wheel velocity sensor 34, while the rear wheel 4 is provided with a rear-wheel wheel velocity sensor 44.

Further, an inertial measurement unit (IMU) 22 is provided on the vehicle-body frame 2. The IMU 22 measures the acceleration and angular velocity of the vehicle. Further, on the vehicle-body frame 2 may be provided a gyro sensor 23, a longitudinal acceleration sensor 24, a vehicle-body velocity detection unit 25, a pitch angle detection unit 26, a roll angle detection unit 27, and other elements. The vehicle-body velocity detection unit 25 calculates the vehicle-body velocity of the motorcycle 1 based on the front-wheel wheel velocity detected by the front-wheel wheel velocity sensor 34 and the rear-wheel wheel velocity detected by the rear-wheel wheel velocity sensor 44. The pitch angle detection unit 26 receives the pitch rate of the motorcycle 1 from the gyro sensor 23. The pitch angle detection unit 26 detects the pitch angle of the motorcycle 1 based on this and other input values. The roll angle detection unit 27 receives the roll rate of the motorcycle 1 from the gyro sensor 23. The roll angle detection unit 27 detects the roll angle of the motorcycle 1 based on this and other input values.

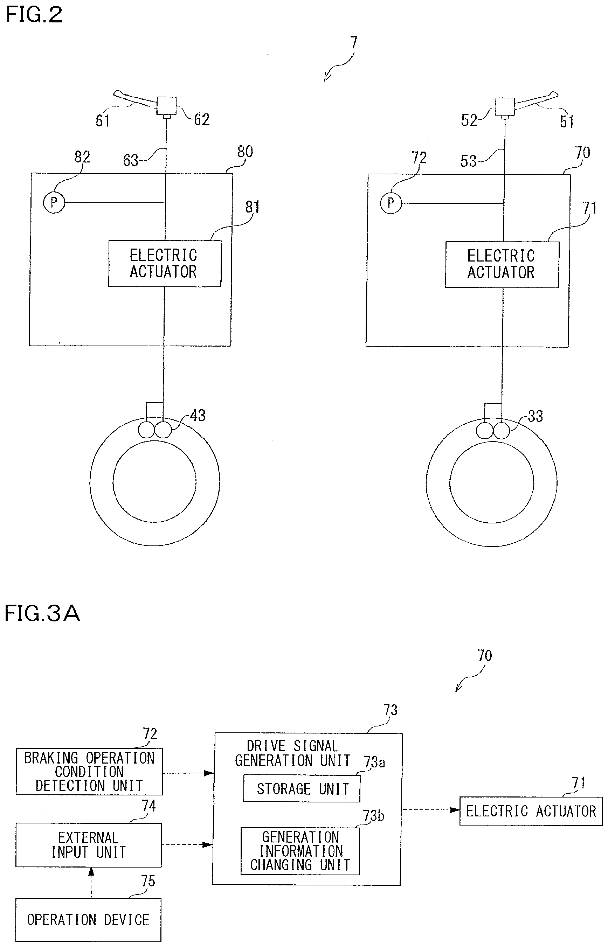

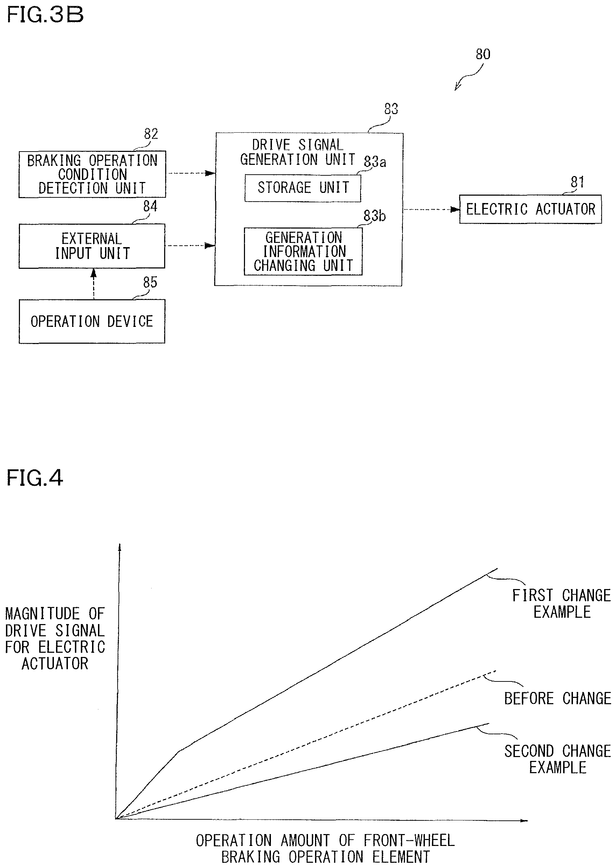

FIG. 2 schematically shows the construction of the brake system 7 of the motorcycle 1. FIGS. 3A and 3B are functional block diagrams of the front-wheel and rear-wheel brake hydraulic-pressure control devices 70 and 80 of the brake system 7. The brake system 7 includes a front-wheel wheel cylinder 33 provided on the front wheel 3 and a rear-wheel wheel cylinder 43 provided on the rear wheel 4. The brake system 7 further includes a front-wheel braking operation element 51 and a rear-wheel braking operation element 61 configured to be operable by a rider driving the motorcycle 1. The present embodiment provides brake levers supported on the handle 20 as examples of the front-wheel and rear-wheel braking operation elements 51 and 61. However, the front-wheel and rear-wheel braking operation elements 51 and 61 are not limited to these forms, and the rear-wheel braking operation element 61 may have the form of a brake pedal supported on the vehicle-body frame 2, for example.

The brake system 7 includes a front-wheel master cylinder 52 coupled to the front-wheel braking operation element 51 for generating a brake hydraulic pressure depending on operation power applied by the rider to the front-wheel braking operation element 51, and a rear-wheel master cylinder 62 coupled to the rear-wheel braking operation element 61 for generating a brake hydraulic pressure depending on operation power applied by the rider to the rear-wheel braking operation element 61. The front-wheel master cylinder 52 is connected to the front-wheel wheel cylinder 33 via a front-wheel brake fluid channel 53. The rear-wheel master cylinder 62 is connected to the rear-wheel wheel cylinder 43 via a rear-wheel brake fluid channel 63. The front-wheel and rear-wheel brake fluid channels 53 and 63 are independent from each other.

The brake system 7 further includes a front-wheel brake hydraulic-pressure control device 70 and a rear-wheel brake hydraulic-pressure control device 80. A brake hydraulic-pressure control device may be provided on one or both of the front-wheel and rear-wheel brake fluid channels 53 and 63 for controlling the brake hydraulic pressure acting on the front-wheel or rear-wheel wheel cylinder 33 or 43. In this particular implementation, the front-wheel brake hydraulic-pressure control device 70 is provided on the front-wheel brake fluid channel 53. The rear-wheel brake hydraulic-pressure control device 80 is provided on the rear-wheel brake fluid channel 63.

The front-wheel brake hydraulic-pressure control device 70 includes a front-wheel electric actuator 71, a front-wheel braking operation condition detection unit 72, a front-wheel drive signal generation unit 73, and an external input unit 74. The front-wheel electric actuator 71 controls the brake hydraulic pressure acting on the front-wheel wheel cylinder 33. The front-wheel braking operation condition detection unit 72 detects the operation condition of the front-wheel braking operation element 51. The front-wheel drive signal generation unit 73 generates a drive signal for driving the front-wheel electric actuator 71.

The front-wheel electric actuator 71 is driven electrically, and is provided on the front-wheel brake fluid channel 53. The front-wheel electric actuator 71 is configured to be capable of electrically controlling brake hydraulic pressure. Examples of the front-wheel electric actuator 71 include electrically driven gear pumps, electrically driven trochoid pumps, electrically driven piston pumps (including swash plate pumps), and electrically driven master cylinders. Preferably, the front-wheel electric actuator 71 is a pump with small hydraulic-pressure variations.

The front-wheel braking operation condition detection unit 72 is capable of detecting the operation condition of the front-wheel braking operation element 51. The front-wheel braking operation condition detection unit 72 may be, for example, a master-cylinder brake hydraulic pressure detection unit for detecting a brake hydraulic pressure generated by the front-wheel master cylinder 52 actuated by an operation of the front-wheel braking operation element 51. The master-cylinder brake hydraulic pressure detection unit may be, for example, a pressure sensor that detects a brake hydraulic pressure generated by the front-wheel master cylinder 52. The front-wheel braking operation condition detection unit 72 outputs a signal corresponding to the detected operation condition of the front-wheel braking operation element 51.

The front-wheel drive signal generation unit 73 defines the relationship between the operation condition of the front-wheel braking operation element 51 and the drive signal for the front-wheel electric actuator 71, and generates a drive signal for driving the front-wheel electric actuator 71 depending on the operation condition of the front-wheel braking operation element 51 detected by the front-wheel braking operation condition detection unit 72.

The front-wheel drive signal generation unit 73 includes a storage unit 73a. The storage unit 73a stores front-wheel drive signal generation information. The front-wheel drive signal generation information defines the relationship between the operation condition of the front-wheel braking operation element 51 and the drive signal for the front-wheel electric actuator 71. The front-wheel drive signal generation information relates to, for example, the magnitude of the drive signal for the front-wheel electric actuator 71 in relation to the operation amount of the front-wheel braking operation element 51.

Alternatively, the front-wheel drive signal generation unit 73 may define the relationship between the operation condition of the front-wheel braking operation element 51 and the drive signal for the front-wheel electric actuator 71 depending on the vehicle-body velocity, vehicle posture (bank angle or pitch angle) or wheel slip condition. That is, the magnitude of the drive signal for the front-wheel electric actuator 71 in relation to the operation amount of the front-wheel braking operation element 51 may be changed depending on the vehicle-body velocity, vehicle posture or wheel slip condition. The vehicle-body velocity, vehicle posture and wheel slip condition may be detected by the IMU 22, vehicle-body velocity detection unit 25, pitch angle detection unit 26 or roll angle detection unit 27, for example.

The front-wheel drive signal generation unit 73 determines the operation condition of the front-wheel braking operation element 51 based on the signal output from the front-wheel braking operation condition detection unit 72, and uses the front-wheel drive signal generation information to generate a drive signal for the front-wheel electric actuator 71 corresponding to the operation condition of the front-wheel braking operation element 51.

The operation device 75 operable by a person, including the rider, may be connected to the external input unit 74. The operation device 75 is positioned at a location on the vehicle, including the vehicle-body frame 2 and handle 20, that is accessible to a person for operation. The operation device 75 may be connected to the external input unit 74 via a cable or wirelessly. In some implementations, the operation device 75 is constantly connected to the external input unit 74; in other implementations, the operation device 75 is switchable between a connected state and a disconnected state with respect to the external input unit 74. For example, the operation device 75 may be an adjustment switch, button or meter positioned at a location on the motorcycle 1. Alternatively, the operation device 75 may be a computer or electronic circuit having a user interface, such as a personal computer or smartphone or a dedicated device, connected to the external input unit 74 as necessary. When a person operates the operation device 75, a signal corresponding to this operation is provided to the external input unit 74.

Depending on the signal received by the external input unit 74 from the outside, the front-wheel drive signal generation unit 73 can change the relationship between the operation condition of the front-wheel braking operation element 51 and the drive signal for the front-wheel electric actuator 71. More specifically, the front-wheel drive signal generation unit 73 includes a front-wheel generation information changing unit 73b. The generation information changing unit may also be referred to as correlation changing unit. The front-wheel generation information changing unit 73b can change the front-wheel drive signal generation information stored in the storage unit 73a depending on the signal received by the external input unit 74 from the outside. As the rider operates the operation device 75, the front-wheel drive signal generation information is changed depending on the operation by the rider. As discussed above, the front-wheel drive signal generation information may be associated with the vehicle-body velocity, vehicle posture, or wheel slip condition. For example, depending on the operation by the rider, the magnitude of the drive signal for the front-wheel electric actuator 71 in relation to the operation amount of the front-wheel braking operation element 51 may be prevented from being changed by the vehicle-body velocity or the like, or the amount of change by the vehicle-body velocity or the like may be increased.

Based on the correlation between the operation condition of the front-wheel braking operation element 51 and the drive signal for the front-wheel electric actuator 71, the front-wheel drive signal generation unit 73 generates a drive signal for driving the front-wheel electric actuator 71 depending on the operation condition of the front-wheel braking operation element 51 detected by the front-wheel braking operation condition detection unit 72. This allows a person to operate the operation device 75 to change the relationship between the operation condition of the front-wheel braking operation element 51 and the drive signal for the front-wheel electric actuator 71. Thus, the correlation of the brake hydraulic pressure acting on the front-wheel wheel cylinder 33 with the operation of the front-wheel braking operation element 51 can be adjusted from the outside. As a result, the rigidity feel in the operation of the front-wheel braking operation element 51 can be adjusted in a simpler manner.

For example, as shown as a first change example in FIG. 4, the magnitude of the drive signal for the front-wheel electric actuator 71 in relation to the operation amount of the front-wheel braking operation element 51 may be changed so as to be larger than that before the change. In this case, the rigidity feel experienced when the front-wheel braking operation element 51 is operated may be made higher than that before the change. During this, the magnitude of the drive signal for the front-wheel electric actuator 71 in relation to the operation amount for an initial period of the operation may be further increased, as indicated by the first change example in FIG. 4.

Alternatively, for example, the front-wheel electric actuator 71 may be of a type where an increase in the magnitude of the drive signal for the front-wheel electric actuator 71 in relation to the operation amount of the front-wheel braking operation element 51 increases the operation stroke of the front-wheel braking operation element 51 in relation to the operation power on the front-wheel braking operation element 51. In this case, as shown as a second change example in FIG. 4, for example, the magnitude of the drive signal for the front-wheel electric actuator 71 in relation to the operation amount (i.e. operation power) of the front-wheel braking operation element 51 may be changed so as to be smaller than that before the change. Thus, the rigidity feel experienced when the front-wheel braking operation element 51 is operated may be made higher than that before the change.

For example, the boost by the electric actuator 71 may be increased to increase braking force. In this case, a larger reduction in vehicle velocity is achieved by a smaller operation amount. This improves the rigidity feel experienced particularly when strong braking is to be done. Also, the magnitude of the drive signal for the electric actuator 71 in relation to the operation amount for an initial period may be increased. This improves the rigidity feel for the initial period of operation.

Alternatively, the brake hydraulic-pressure control device may be a boost mechanism of a type that increases the operation stroke in relation to the operation power by means of boosting. In such implementations, an increased boost generates a braking force for smaller operation power, but increases operation stroke. As such, the rider may find the gripping feel unsatisfactory. On the other hand, if the boost by the electric actuator is suppressed, the operation stroke in relation to the operation power decreases (i.e. the operation power for the same operation stroke increases). This improves the rigidity feel (i.e. gripping feel) during operation.

The front-wheel drive signal generation unit 73 may define the relationship between the operation condition of the front-wheel braking operation element 51 and the drive signal for the front-wheel electric actuator 71 in such a manner that it varies depending on the vehicle condition. For example, the relationship may be defined in such a manner that, when the front-wheel braking operation element 51 is operated by a predetermined operation amount, the brake hydraulic pressure acting on the front-wheel wheel cylinder 33 varies depending on whether the vehicle is stopped and the main switch is off or the vehicle is travelling.

If, with the motorcycle 1 stopped and the main switch off, the motorcycle 1 is being moved, the braking force to be generated by the front-wheel braking operation element 51 may be relative small since the motorcycle 1 is relatively light-weight and the motorcycle 1 is moving at low speed. On the other hand, while the motorcycle 1 is travelling, the braking force to be generated by the front-wheel braking operation element 51 must be relative large. Thus, the front-wheel drive signal generation unit 73 may define the relationship between the operation condition of the front-wheel braking operation element 51 and the drive signal for the front-wheel electric actuator 71 in such a manner that the brake hydraulic pressure acting on the front-wheel wheel cylinder 33 when the front-wheel braking operation element 51 has been operated by the same operation amount varies depending on whether at least the vehicle is stopped and the main switch is off or the vehicle is travelling.

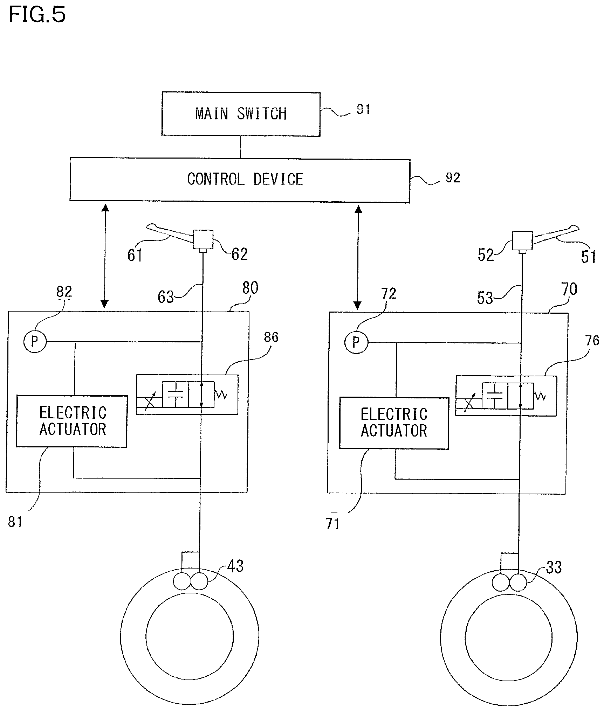

FIG. 5 shows an example construction of a brake system that causes the brake hydraulic pressure in the front-wheel wheel cylinder in relation to the operation condition of the front-wheel braking operation element 51 to vary depending on whether the main switch is off or the vehicle is travelling. In the example shown in FIG. 5, the straddled vehicle (for example, motorcycle) includes a control device 92 for controlling the straddled vehicle and a main switch 91 for starting the control device 92. The front-wheel brake hydraulic-pressure control device 70 may include a front-wheel electric valve 76.

The front-wheel electric valve 76 is provided on the front-wheel brake fluid channel 53 and switches the front-wheel brake fluid channel 53 between disconnected and communicated states. The front-wheel electric valve 75 leaves the front-wheel brake fluid channel 53 in the communicated state when the main switch 91 is off. When the main switch 91 is off, the front-wheel electric actuator 71 may not be driven and may not add to the brake hydraulic pressure for the front-wheel wheel cylinder 33. When the front-wheel brake fluid channel 53 is in the communicated state, the front-wheel wheel cylinder 33 is not controlled by the front-wheel electric actuator 71 with respect to the brake hydraulic pressure, and is actuated by the brake hydraulic pressure of the front-wheel master cylinder 52.

The front-wheel electric valve 76 holds the front-wheel brake fluid channel 53 in the disconnected state during at least a section of the period for the main switch 91 on. For example, when the main switch 91 is on and the vehicle is travelling, the front-wheel electric valve 76 may hold the front-wheel brake fluid channel 53 in the disconnected state. While the front-wheel brake fluid channel 53 is in the disconnected state, the brake hydraulic pressure of the front-wheel wheel cylinder 33 may be controlled by the front-wheel electric actuator 71. The front-wheel drive signal generation unit 73 may define the relationship between the operation condition of the front-wheel braking operation element 51 and the drive signal for the front-wheel electric actuator 71 in such a manner that the brake hydraulic pressure acting on the front-wheel wheel cylinder 33 in relation to a predetermined operation amount of the front-wheel braking operation element 51 varies depending on whether the front-wheel brake fluid channel 53 is in the disconnected state or in the communicated state. For example, the front-wheel electric valve 76 may leave the front-wheel brake fluid channel 53 in the communicated state when the main switch 91 is off, and the front-wheel electric valve 76 may hold the front-wheel brake fluid channel 53 in the disconnected state when the main switch 91 is on.

The workings of the front-wheel drive signal generation unit 73 in the arrangement shown in FIG. 5 are not limited to the above example. For example, the front-wheel drive signal generation unit 73 may be configured to drive the front-wheel electric actuator 71 to control the brake hydraulic pressure of the front-wheel wheel cylinder 33 regardless of whether the main switch 91 is off or the main switch 91 is on.

The rear-wheel brake hydraulic-pressure control device 80 includes: a rear-wheel electric actuator 81 capable of controlling the brake hydraulic pressure acting on the rear-wheel wheel cylinder 43; a rear-wheel braking operation condition detection unit 82 for detecting the operation condition of the rear-wheel braking operation element 61; a rear-wheel drive signal generation unit 83 for generating a drive signal for driving the rear-wheel electric actuator 81; and an external input unit 84. The rear-wheel drive signal generation unit 83 includes a storage unit 83a and a rear-wheel generation information changing unit 83b. The storage unit 83a stores rear-wheel drive signal generation information. The rear-wheel drive signal generation information defines the relationship between the operation condition of the rear-wheel braking operation element 61 and the drive signal for the rear-wheel electric actuator 81. An operation device 85 operable by a person, including the rider, may be connected to the external input unit 84. The external input unit 84 of the rear-wheel brake hydraulic-pressure control device 80 may be the same element as the external input unit 74 of the front-wheel brake hydraulic-pressure control device 70, or a separate element. Thus, the rear-wheel brake hydraulic-pressure control device 80 has the same configuration as the front-wheel brake hydraulic-pressure control device 70, and thus no detailed description will be given.

As shown in FIG. 5, the rear-wheel brake hydraulic-pressure control device 80 may include a rear-wheel electric valve 86. The rear-wheel electric valve 86 is provided on the rear-wheel brake fluid channel 63 and switches the rear-wheel brake fluid channel 63 between disconnected and communicated states. The rear-wheel electric valve 86 leaves the rear-wheel brake fluid channel 63 in the communicated state when the main switch 91 is off. When the main switch 91 is off, the rear-wheel electric actuator 81 may not be driven and may not add to the brake hydraulic pressure of the rear-wheel wheel cylinder 43. When the rear-wheel brake fluid channel 63 is in the communicated state, the rear-wheel wheel cylinder 43 is not controlled by the rear-wheel electric actuator 81 with respect to the brake hydraulic pressure, and is actuated by the brake hydraulic pressure of the rear-wheel master cylinder 62.

The rear-wheel electric valve 86 holds the rear-wheel brake fluid channel 63 in the disconnected state during at least a section of the period for the main switch 91 on. For example, when the main switch 91 is on and the vehicle is travelling, the rear-wheel electric valve 86 may hold the rear-wheel brake fluid channel 63 in the disconnected state. While the rear-wheel brake fluid channel 63 is in the disconnected state, the brake hydraulic pressure of the rear-wheel wheel cylinder 43 may be controlled by the rear-wheel electric actuator 81. The rear-wheel drive signal generation unit 83 may define the relationship between the operation condition of the rear-wheel braking operation element 61 and the drive signal for the rear-wheel electric actuator 81 in such a manner that the brake hydraulic pressure acting on the rear-wheel wheel cylinder 43 in relation to a predetermined operation amount of the rear-wheel braking operation element 61 when the main switch 91 is off and the rear-wheel brake fluid channel 63 is in the communicated state is different from the brake hydraulic pressure acting on the rear-wheel wheel cylinder 43 in relation to a predetermined operation amount of the rear-wheel braking operation element 61 when the rear-wheel brake fluid channel 63 is in the disconnected state.

The workings of the rear-wheel drive signal generation unit 83 in the arrangement shown in FIG. 5 are not limited to the above example. For example, the rear-wheel drive signal generation unit 83 may be configured to drive the rear-wheel electric actuator 81 to control the brake hydraulic pressure of the rear-wheel wheel cylinder 43 regardless of whether the main switch 91 is off or the main switch 91 is on.

### [Other Embodiments]

(1) As discussed above, a brake hydraulic-pressure control device may be provided on each of the front and rear wheels 3 and 4; alternatively, a brake hydraulic-pressure control device may be provided only on the front or rear wheel 3 or 4.
(2) The brake hydraulic-pressure control device may be combined with an ABS device or an interlock braking apparatus. Further, a portion of a brake hydraulic-pressure control device may serve as part of an ABS device or interlock braking apparatus.

At least one of the front-wheel drive signal generation unit and rear-wheel drive signal generation unit may be constituted by a computer including memory and a processor, or an electronic circuit. For example, the drive signal generation unit may be part of an ECU. The external input unit may be constructed as an interface through which signals or data may be provided to the drive signal generation unit. The external input unit may be, for example, an interface that provides an external connection for the ECU.

The operation device may be configured to be constantly connected to the external input unit. In such implementations, the operation device is attached to the straddled vehicle. The operation device may be configured to include a switch, a button and other operation parts that receive operations by the rider. Further, the operation device may be configured to be capable of being connected to, and disconnected from, the external input unit. For example, the operation device may be detachable from the external input unit. The external input unit may include a terminal which the operation device may be connected to and detached from, for example. Alternatively, the operation device may be configured to be wirelessly connectable to the external input unit. While the operation device is wirelessly connected to the external input unit, the operation device and front-wheel drive signal generation unit are capable of communicating with each other.

The implementation where the front-wheel drive signal generation unit defines the correlation between the operation condition of the front-wheel braking operation element and the drive signal for the front-wheel electric actuator may be an implementation where front-wheel drive signal generation information indicative of the correlation between the operation condition of the front-wheel braking operation element and the drive signal for the front-wheel electric actuator is stored, as discussed above. The front-wheel drive signal generation information may be correlation data for determining the drive signal corresponding to the operation condition of the front-wheel braking operation element. The front-wheel drive signal generation information may be information indicative of the ratio of the brake hydraulic pressure of the front-wheel wheel cylinder relative to the brake hydraulic pressure of the front-wheel master cylinder, for example. The front-wheel drive signal generation information may be described as information indicative of the braking force applied to the front-wheel by the front-wheel electric actuator in relation to the operation amount of the front-wheel braking operation element. The implementation where the front-wheel drive signal generation information is stored may be an implementation where the information is stored in the format of map data or table data, or may be a program or electronic circuit for calculating the drive signal corresponding to the input operation condition of the front-wheel braking operation element.

Based on the defined correlation, the front-wheel drive signal generation unit generates a drive signal corresponding to the operation condition of the front-wheel braking operation element detected by the front-wheel braking operation condition detection unit. The drive signal may be a signal indicative of the brake hydraulic pressure to be applied to the front-wheel wheel cylinder by the front-wheel electric actuator. For example, if the front-wheel electric actuator is a motor, the drive signal may be a command value for the motor.

The front-wheel correlation changing unit changes the correlation between the operation condition of the front-wheel braking operation element and the drive signal for the front-wheel electric actuator based on external input information received via the external input unit. The external input information is information that is based on an operation by a person of the operation device connected to the external input unit. The external input information may be, for example, information commanding a change in the correlation or information indicative of the changed correlation. A signal indicating the external input information is a signal that is based on an operation of the operation device. This signal may be an analog signal or a digital signal (i.e. data). The implementation where the front-wheel correlation changing unit changes the correlation may be, for example, an implementation where the stored front-wheel drive signal generation information is updated based on the external input information.

With the external input unit and operation device connected to each other, the front-wheel correlation changing unit receives a signal that is based on an operation of the operation device via the external input. The front-wheel correlation changing unit changes the correlation based on this signal. The front-wheel correlation changing unit may change the correlation after the external input unit has received the signal that is based on the operation of the operation device and while the operation device is disconnected from the external input unit. Alternatively, the front-wheel drive signal generation unit may generate a drive signal for driving the front-wheel electric actuator corresponding to the operation condition of the front-wheel braking operation element based on the correlation changed by the front-wheel correlation changing unit while the external input unit and operation device are connected to each other, i.e. before the external input unit is disconnected from the operation device.

The implementation where the rear-wheel drive signal generation unit defines the correlation between the operation condition of the rear-wheel braking operation element and the drive signal for the rear-wheel electric actuator may be an implementation where rear-wheel drive signal generation information indicative of the correlation between the operation condition of the braking operation element and the drive signal for the rear-wheel electric actuator is stored, as discussed above. The rear-wheel drive signal generation information may be correlation data for determining the drive signal corresponding to the operation condition of the rear-wheel braking operation element. The rear-wheel drive signal generation information may be information indicative of the ratio of the brake hydraulic pressure of the rear-wheel wheel cylinder relative to the brake hydraulic pressure of the rear-wheel master cylinder, for example. The rear-wheel drive signal generation information may be described as information indicative of the braking force applied to the rear-wheel by the rear-wheel electric actuator in relation to the operation amount of the rear-wheel braking operation element. The implementation where the rear-wheel drive signal generation information is stored may be an implementation where the information is stored in the format of map data or table data, or may be a program or electronic circuit for calculating the drive signal corresponding to the input operation condition of the rear-wheel braking operation element.

Based on the defined correlation, the rear-wheel drive signal generation unit generates a drive signal corresponding to the operation condition of the rear-wheel braking operation element detected by the rear-wheel braking operation condition detection unit. The drive signal may be a signal indicative of the brake hydraulic pressure to be applied to the rear-wheel wheel cylinder by the rear-wheel electric actuator. For example, if the rear-wheel electric actuator is a motor, the drive signal may be a command value for the motor.

The rear-wheel correlation changing unit changes the correlation between the operation condition of the rear-wheel braking operation element and the drive signal for the rear-wheel electric actuator based on external input information received via the external input unit. The external input information is information that is based on an operation by a person of the operation device connected to the external input unit. The external input information may be, for example, information commanding a change in the correlation or information indicative of the changed correlation. A signal indicating the external input information is a signal that is based on an operation of the operation device. This signal may be an analog signal or a digital signal (i.e. data). The implementation where the rear-wheel correlation changing unit changes the correlation may be, for example, an implementation where the stored rear-wheel drive signal generation information is updated based on the external input information.

With the external input unit and operation device connected to each other, the rear-wheel correlation changing unit receives a signal that is based on an operation of the operation device via the external input. The rear-wheel correlation changing unit changes the correlation based on this signal. The rear-wheel correlation changing unit may change the correlation after the external input unit has received the signal that is based on the operation of the operation device and while the operation device is disconnected from the external input unit. Alternatively, the rear-wheel drive signal generation unit may generate a drive signal for driving the rear-wheel electric actuator corresponding to the operation condition of the rear-wheel braking operation element based on the correlation changed by the rear-wheel correlation changing unit while the external input unit and operation device are connected to each other, i.e. before the external input unit is disconnected from the operation device.

At least one of the front-wheel brake hydraulic-pressure control device and rear wheel brake hydraulic-pressure control device may be, for example, a booster i.e. servo device that supplies the wheel cylinder with a brake hydraulic pressure larger than the brake hydraulic pressure input to the master cylinder. Alternatively, the brake hydraulic-pressure control device may be a device that supplies the wheel cylinder with a brake hydraulic pressure that does not exceed the brake hydraulic pressure input to the master cylinder.

At least one of the front-wheel braking operation element and rear-wheel braking operation element may be supported on the handle. The rider may operate at least one of the front-wheel and rear-wheel braking operation elements with his hand. The rider can easily perceive the rigidity feel of the braking operation element operated with his hand. For example, at least one of the front-wheel and rear-wheel braking operation elements may be a lever extending along a grip of the bar handle. One of the front-wheel and rear-wheel braking operation elements may be a brake lever supported on the bar handle and the other may be a brake pedal positioned to be operable by the rider with his foot.

The bar handle includes a bar extending in the left-right direction of the straddled vehicle and rotatably supported on the vehicle-body frame. The bar of the bar handle may be composed of a single bar, or may be composed of two bars, to the left and right, connected to each other. For example, the left and right bars of the bar handle may be separate parts. That is, the bar handle may be a separate handle. A left grip is provided on the left end of the bar of the bar handle. A right grip is provided on the right end of the bar. The bar handle may swing in a range of 180 degrees (i.e. half rotation) or smaller. This swing range is represented by the difference between the steering angle found when the bar handle is operated to the leftmost and the steering angle found when the bar handle is operated to the rightmost (i.e. lock-to-lock).

Each of the front-wheel master cylinder, front-wheel wheel cylinder, rear-wheel master cylinder and rear-wheel wheel cylinder may be constructed to include a cylinder bore and a piston inserted into the cylinder bore. The cylinder bore and piston define, therebetween, a hydraulic pressure chamber filled with a brake fluid. The piston is positioned to be movable relative to the cylinder bore in the axial direction. The piston moves in the axial direction relative to the cylinder bore such that the brake hydraulic pressure in the cylinder changes. This actuates the cylinder. The hydraulic pressure chamber in the front-wheel master cylinder communicates with the hydraulic pressure chamber in the front-wheel wheel cylinder via the front-wheel brake fluid channel. The hydraulic pressure chamber in the rear-wheel master cylinder communicates with the hydraulic pressure chamber in the rear-wheel wheel cylinder via the rear-wheel brake fluid channel. The piston in the front-wheel master cylinder is coupled to the front-wheel braking operation element so as to move in response to an operation of the front-wheel braking operation element. The piston in the rear-wheel master cylinder is coupled to the rear-wheel braking operation element so as to move in response to an operation of the rear-wheel braking operation element. The piston in the front-wheel wheel cylinder is coupled to the caliper of the front-wheel brake. The caliper of the front-wheel brake is actuated by a movement of the piston in the front-wheel wheel cylinder. The piston in the rear-wheel wheel cylinder is coupled to the caliper in the rear-wheel brake. The caliper of the rear-wheel brake is actuated by a movement of the piston in the rear-wheel wheel cylinder.

An operation of the front-wheel braking operation element by the rider applies a brake hydraulic pressure to the front-wheel master cylinder. The front-wheel brake hydraulic-pressure control device applies, to the front-wheel wheel cylinder, a brake hydraulic pressure that is based on the brake hydraulic pressure in the front-wheel master cylinder. A front-wheel electric valve may be provided on the front-wheel brake fluid channel. The front-wheel brake hydraulic-pressure control device may be configured to apply a brake hydraulic pressure to the front-wheel wheel cylinder while the front-wheel brake fluid channel is held by the front-wheel electric valve in the disconnected state. The front-wheel brake hydraulic-pressure control device may be configured to apply a brake hydraulic pressure to the front-wheel wheel cylinder while the front-wheel brake fluid channel is in the communicated state between the front-wheel wheel cylinder and front-wheel wheel cylinder.

An operation of the rear-wheel braking operation element by the rider applies a brake hydraulic pressure to the rear-wheel master cylinder. The rear-wheel brake hydraulic-pressure control device applies, to the rear-wheel wheel cylinder, a brake hydraulic pressure that is based on the brake hydraulic pressure in the rear-wheel master cylinder. A rear-wheel electric valve may be provided on the rear-wheel brake fluid channel. The rear-wheel brake hydraulic-pressure control device may be configured to apply a brake hydraulic pressure to the rear-wheel wheel cylinder while the rear-wheel brake fluid channel is held by the rear-wheel electric valve in the disconnected state. The rear-wheel brake hydraulic-pressure control device may be configured to apply a brake hydraulic pressure to the rear-wheel wheel cylinder while the rear-wheel brake fluid channel is in the communicated state between the rear-wheel wheel cylinder and rear-wheel wheel cylinder.

In addition, in the straddled vehicle of the present invention, the rigidity of parts may be changed to change the rigidity feel. For example, a pipe or hose forming a portion of the brake fluid channel, a master cylinder, a wheel cylinder, a brake caliper or other parts may be replaced to change the rigidity feel experienced when the rider operates the braking operation element.

If the increase in the brake hydraulic pressure in the wheel cylinder produced by the electric actuator is increased, the rider may feel as if the rigidity of the braking operation element were lower, i.e. the braking operation element were softer. If the increase in the brake hydraulic pressure in the wheel cylinder produced by the electric actuator is reduced, the rider may feel as if the rigidity of the braking operation element were higher, i.e. the braking operation element were harder.

The ECU in the above embodiments is an example of the control device for controlling the straddled vehicle. The control device may be a device for electrically controlling the straddled vehicle. The control device is supplied with electric power from the battery mounted on the straddled vehicle and operates. The control device may control at least some of the functions of the straddled vehicle that are electrically controlled. For example, the control device may include at least one of the front-wheel and rear-wheel drive signal generation units.

The main switch may be a switch that switches the control device between an operational state and a non-operational state. The operational and non-operational states of the control device may be, for example, a power-on state where electric power is being supplied from the battery and a power-off state where no electric power is being supplied from the battery. Alternatively, the operational and non-operational states may be a first state where predetermined operations can be performed and a second state where the electric power consumption and the number of operations that can be performed are smaller than those for the first state. Thus, the main switch may be a switch that switches between electric power being supplied to the control device and no electric power being supplied, or changes the amount of electric power being supplied. The main switch may be switched between on and off by an operation by the rider, for example.

The main switch may be a switch that starts the control device. For example, when the main switch is switched from off to on, the control device (non-operational) is started. When the main switch is switched from on to off, the control device (operational) is switched to the non-operational state. The time point at which the rider switches the main switch may not necessarily be the same time point at which the main switch is turned between on and off. For example, when the rider manually switches the main switch from off to on, the main switch is switched from off to on. When the rider manually switches the main switch from on to off, the main switch may be configured to be turned off when the vehicle-body velocity becomes zero after the rider manually switched off the main switch. In this case, if the vehicle-body velocity of the straddled vehicle is not zero when the rider manually switches the main switch from on to off, the main switch is kept on and the control device is kept operational. Thereafter, when the vehicle-body velocity becomes zero, the main switch is turned from on to off, and the control device is switched from the operational state to the non-operational state.

The straddled vehicle may also be configured such that the engine is stopped while the main switch is off. When the main switch is switched from off to on, the engine, which has been stopped, is started, and, when the main switch is switched from on to off, the engine, which has been driven, is stopped. The period during which the main switch is on may include a period where the engine is stopped.

For example, when the rider operates the braking operation element in a portion of the period where the main switch is on, the wheel cylinder may be configured to be actuated by a brake hydraulic pressure controlled by the driving by the electric actuator. In this case, for example, the brake hydraulic pressure in the wheel cylinder may be controlled by the electric actuator when a predetermined condition is met while the main switch is on. Alternatively, in the entire period where the main switch is on, when the rider has operated the braking operation element, the wheel cylinder may be configured to be actuated as a result of being controlled by the electric actuator with respect to the brake hydraulic pressure.

The electric actuator may be configured to have no accumulator. In this case, the electric actuator may change the output of the drive source such as motor to achieve a variable brake hydraulic pressure to be supplied to the wheel cylinder, thereby adjusting this pressure. The electric actuator is not limited to arrangements with no accumulator. For example, the electric actuator may include a hydraulic pump and an accumulator. In this case, the accumulator accumulates the hydraulic pressure output from the hydraulic pump and supplies a certain hydraulic pressure. The electric actuator uses a hydraulic pressure supplied by the accumulator to control the brake hydraulic pressure in the wheel cylinder. When the hydraulic pressure in the accumulator drops below a lower limit, the hydraulic pump may be actuated; when the hydraulic pressure in the accumulator has reached a target level, the hydraulic pump may be stopped.

At least one of the front-wheel and rear-wheel electric valves may switch the brake fluid channel between a communicated state and a disconnected state, or may be configured to squeeze the bore of the brake fluid channel like a faucet. The electric valve leaves the brake fluid channel in the communicated state when the main switch is off. In at least a portion of the period where the main switch is on, the electric valve may hold the brake fluid channel in the disconnected state, or the bore of the brake fluid channel may be squeezed. Alternatively, the electric valve may leave the brake fluid channel in the communicated state even when the main switch is on.

The drive signal generation unit may generate the drive signal for driving the electric actuator based on at least one of the vehicle-body velocity, vehicle posture, or wheel slip condition, and on the operation condition of the braking operation element detected by the braking operation condition detection unit. That is, the ratio of the brake hydraulic pressure of the wheel cylinder relative to the brake hydraulic pressure of the master cylinder may be decided based on at least one of the vehicle-body velocity, vehicle posture, or wheel slip condition. In this case, the drive signal generation unit may store in advance, in data or a program or the like, the correspondence between at least one of the vehicle-body velocity, vehicle posture, or wheel slip condition and the operation condition of the braking operation element, and the drive signal for the electric actuator. In this case, the drive signal generation unit may use the correspondence stored in advance to generate a drive signal corresponding to at least one of the vehicle-body velocity, vehicle posture, or wheel slip condition and the operation condition of the braking operation element.

The vehicle-body frame is a member for receiving stresses acting on the leaning vehicle during travel. For example, examples of the vehicle-body frame include a monocoque (stress skin construction), semi-monocoque, or a construction where vehicle parts also serve to receive stresses. For example, parts such as the engine or air cleaner may form part of the vehicle-body frame.

The front-wheel braking operation condition detection unit detects a physical quantity indicative of the operation condition of the front-wheel braking operation element. The physical quantity indicative of the operation condition of the front-wheel braking operation element may be, for example, the brake hydraulic pressure in the front-wheel master cylinder or how it changes over time, the displacement of the front-wheel braking operation element or how it changes over time, or the force acting on the front-wheel braking operation element or front-wheel master cylinder or how they change over time. The rear-wheel braking operation condition detection unit detects a physical quantity indicative of the operation condition of the rear-wheel braking operation element. The physical quantity indicative of the operation condition of the rear-wheel braking operation element may be, for example, the brake hydraulic pressure in the rear-wheel master cylinder or how it changes over time, the displacement of the rear-wheel braking operation element or how it changes over time, or the force acting on the rear-wheel braking operation element or rear-wheel master cylinder or how they change over time.

### EXPLANATION OF CHARACTERS

- 1: straddled vehicle
- 2: vehicle-body frame
- 3: front wheel
- 4: rear wheel
- 20: handle
- 30: front-wheel brake
- 33: front-wheel wheel cylinder
- 40: rear-wheel brake
- 43: rear-wheel wheel cylinder
- 51: front-wheel braking operation element
- 52: front-wheel master cylinder
- 53: front-wheel brake fluid channel
- 61: rear-wheel braking operation element
- 62: rear-wheel master cylinder
- 63: rear-wheel brake fluid channel
- 70: brake hydraulic-pressure control device
- 71: electric actuator
- 72: braking operation condition detection unit
- 73: drive signal generation unit
- 74: external input unit
- 75: operation device
- 80: brake hydraulic-pressure control device
- 81: electric actuator
- 82: braking operation condition detection unit
- 83: drive signal generation unit
- 84: external input unit
- 85: operation device

## Claims

1. A straddled vehicle (1) comprising:
a vehicle-body frame (2);
a front wheel (3) and a rear wheel (4) supported by the vehicle-body frame (2);
a front-wheel brake (30) provided on the front wheel (3) and including a front-wheel wheel cylinder (33) for generating a braking force for the front wheel (3);
a front-wheel braking operation element (51) operable by a rider;
a front-wheel master cylinder (52) configured to be actuated by an operation of the front-wheel braking operation element (51);
a front-wheel brake fluid channel (53) connecting the front-wheel master cylinder (52) with the front-wheel wheel cylinder (33);
a rear-wheel brake (40) provided on the rear wheel (4) and including a rear-wheel wheel cylinder (43) for generating a braking force for the rear wheel (4);
a rear-wheel braking operation element (61) operable by the rider;
a rear-wheel master cylinder (62) configured to be actuated by an operation of the rear-wheel braking operation element (61);
a rear-wheel brake fluid channel (63) connecting the rear-wheel master cylinder (62) with the rear-wheel wheel cylinder (43);
an external input unit (74, 84), an operation device (75, 85) operable by a person being connectable to the external input unit (74, 84); and
at least one of a front-wheel brake hydraulic-pressure control device (70) and a rear-wheel brake hydraulic-pressure control device (80),
wherein the front-wheel brake fluid channel (53) is independent from the rear-wheel brake fluid channel (63),
wherein the front-wheel brake hydraulic-pressure control device (70) includes:
a front-wheel electric actuator (71) configured to be driven electrically, the front-wheel electric actuator (71) being provided on the front-wheel brake fluid channel (53) for controlling a brake hydraulic pressure acting on the front-wheel wheel cylinder (33);
a front-wheel braking operation condition detection unit (72) configured to detect an operation condition of the front-wheel braking operation element (51); and
a front-wheel drive signal generation unit (73) configured to define a correlation between the operation condition of the front-wheel braking operation element (51) and a drive signal for the front-wheel electric actuator (71) and, based on the operation condition of the front-wheel braking operation element (51) detected by the front-wheel braking operation condition detection unit (72), generate a drive signal for driving the front-wheel electric actuator (71),
wherein the front-wheel drive signal generation unit (73) includes a front-wheel correlation changing unit (73b), wherein the front-wheel correlation changing unit (73b) is configured to change the correlation between the operation condition of the front-wheel braking operation element (51) and the drive signal for the front-wheel electric actuator (71) based on a signal received by the external input unit (74, 84) from the operation device (75, 85) connected to the external input unit (74, 84),
wherein the rear-wheel brake hydraulic-pressure control device (80) includes:
a rear-wheel electric actuator (81) configured to be driven electrically, the rear-wheel electric actuator (81) being provided on the rear-wheel brake fluid channel (63) for controlling a brake hydraulic pressure acting on the rear-wheel wheel cylinder (43),
a rear-wheel braking operation condition detection unit (82) configured to detect an operation condition of the rear-wheel braking operation element (61); and
a rear-wheel drive signal generation unit (83) configured to define a correlation between the operation condition of the rear-wheel braking operation element (61) and a drive signal for the rear-wheel electric actuator (81) and, based on the operation condition of the rear-wheel braking operation element (61) detected by the rear-wheel braking operation condition detection unit (82), generate a drive signal for driving the rear-wheel electric actuator (81), and
wherein the rear-wheel drive signal generation unit (83) includes a rear-wheel correlation changing unit (83b), wherein the rear-wheel correlation changes unit is configured to change the correlation between the operation condition of the rear-wheel braking operation element (61) and the drive signal for the rear-wheel electric actuator (81) based on a signal received by the external input unit (74, 84) from the operation device (75, 85) connected to the external input unit (74, 84).

2. The straddled vehicle (1) according to claim 1, wherein the operation device (75, 85) is connected to the external input unit (74, 84) and provided on the straddled vehicle (1),
the front-wheel correlation changing unit (73b) is configured to change the correlation between the operation condition of the front-wheel braking operation element (51) and the drive signal for the front-wheel electric actuator (71) based on the signal received by the external input unit (74, 84) from the operation device (75, 85), the signal being based on the operation of the operation device (75, 85) by the rider, and
the rear-wheel correlation changing unit (83b) is configured to change the correlation between the operation condition of the rear-wheel braking operation element (61) and the drive signal for the rear-wheel electric actuator (81) based on the signal received by the external input unit (74, 84) from the operation device (75, 85), the signal being based on the operation of the operation device (75, 85) by the rider.

3. The straddled vehicle (1) according to claim 1, wherein, with the operation device (75, 85) being connected to the external input unit (74, 84), the front-wheel correlation changing unit (73b) is configured to change the correlation between the operation condition of the front-wheel braking operation element (51) and the drive signal for the front-wheel electric actuator (71) based on the operation of the operation device (75, 85),
with the operation device (75, 85) not being connected to the external input unit (74, 84), the front-wheel drive signal generation unit (73) is configured to generate the drive signal for driving the front-wheel electric actuator (71) depending on the operation condition of the front-wheel braking operation element (51) detected by the front-wheel braking operation condition detection unit (72) based on the correlation changed by the front-wheel correlation changing unit (73b),
with the operation device (75, 85) being connected to the external input unit (74, 84), the rear-wheel correlation changing unit (83b) is configured to change the correlation between the operation condition of the rear-wheel braking operation element (61) and the drive signal for the rear-wheel electric actuator (81) based on the operation of the operation device (75, 85), and
with the operation device (75, 85) not being connected to the external input unit (74, 84), the rear-wheel drive signal generation unit (83) is configured to generate the drive signal for driving the rear-wheel electric actuator (81) depending on the operation condition of the rear-wheel braking operation element (61) detected by the rear-wheel braking operation condition detection unit (82) based on the correlation changed by the rear-wheel correlation changing unit (83b).

4. The straddled vehicle (1) according to any one of claims 1 to 3, wherein the front-wheel braking operation condition detection unit (72) is configured to detect a front-wheel master-cylinder brake hydraulic pressure generated in the front-wheel master cylinder (52) actuated by the operation of the front-wheel braking operation element (51),
the front-wheel drive signal generation unit (73) is configured to generate the drive signal for driving the front-wheel electric actuator (71) based on the front-wheel master-cylinder brake hydraulic pressure detected by the front-wheel braking operation condition detection unit (72),
the rear-wheel braking operation condition detection unit (82) is configured to detect a rear-wheel master-cylinder brake hydraulic pressure generated in the rear-wheel master cylinder (62) actuated by the operation of the rear-wheel braking operation element (61), and
the rear-wheel drive signal generation unit (83) is configured to generate the drive signal for driving the rear-wheel electric actuator (81) based on the rear-wheel master-cylinder brake hydraulic pressure detected by the rear-wheel braking operation condition detection unit (82).

5. The straddled vehicle (1) according to any one of claims 1 to 4, wherein the front-wheel drive signal generation unit (73) is configured to generate the drive signal for driving the front-wheel electric actuator (71) based on at least one of a vehicle-body velocity, a vehicle posture, or a wheel slip condition, and on the operation condition of the front-wheel braking operation element (51) detected by the front-wheel braking operation condition detection unit (72), and
the rear-wheel drive signal generation unit (83) is configured to generate the drive signal for driving the rear-wheel electric actuator (81) based on at least one of a vehicle-body velocity, a vehicle posture, or a wheel slip condition, and on the operation condition of the rear-wheel braking operation element (61) detected by the rear-wheel braking operation condition detection unit (82).

## Patentansprüche

1. Ein rittlings zu fahrendes Fahrzeug (1), das folgende Merkmale aufweist:
einen Fahrzeugkarosserierahmen (2);
ein Vorderrad (3) und ein Hinterrad (4), die durch den Fahrzeugkarosserierahmen (2) getragen werden;
eine Vorderradbremse (30), die an dem Vorderrad (3) vorgesehen ist und einen Vorderrad-Radzylinder (33) zum Erzeugen einer Bremskraft für das Vorderrad (3) umfasst;
ein Vorderradbremsbedienungselement (51), das durch einen Fahrer bedient werden kann;
einen Vorderradhauptzylinder (52), der dazu konfiguriert ist, durch eine Bedienung des Vorderradbremsbedienungselements (51) betätigt zu werden;
einen Vorderradbremsfluidkanal (53), der den Vorderradhauptzylinder (52) mit dem Vorderrad-Radzylinder (33) verbindet;
eine Hinterradbremse (40), die an dem Hinterrad (4) vorgesehen ist und einen Hinterrad-Radzylinder (43) zum Erzeugen einer Bremskraft für das Hinterrad (4) umfasst;
ein Hinterradbremsbedienungselement (61), das durch einen Fahrer bedient werden kann;
einen Hinterradhauptzylinder (62), der dazu konfiguriert ist, durch eine Bedienung des Hinterradbremsbedienungselements (61) betätigt zu werden;
einem Hinterradbremsfluidkanal (63), der den Hinterradhauptzylinder (62) mit dem Hinterrad-Radzylinder (43) verbindet;
eine externe Eingabeeinheit (74, 84), eine durch eine Person bedienbare Bedienungsvorrichtung (75, 85), die mit der externen Eingabeeinheit (74, 84) verbunden sein kann; und
zumindest eine Vorderradbremshydraulikdruck-Steuereinrichtung (70) und/oder eine Hinterradbremshydraulikdruck-Steuereinrichtung (80),
wobei der Vorderradbremsfluidkanal (53) unabhängig von dem Hinterradbremsfluidkanal (63) ist,
wobei die Vorderradbremshydraulikdruck-Steuereinrichtung (70) Folgendes umfasst:
einen elektrischen Vorderradaktuator (71), der dazu konfiguriert ist, elektrisch angetrieben zu werden, wobei der elektrische Vorderradaktuator (71) an dem Vorderradbremsfluidkanal (53) vorgesehen ist, um einen hydraulischen Bremsdruck zu steuern, der auf den Vorderrad-Radzylinder (33) wirkt;
eine Vorderradbremsbedienungszustands-Erfassungseinheit (72), die dazu konfiguriert ist, einen Bedienungszustand des Vorderradbremsbedienungselements (51) zu erfassen; und
eine Vorderradantriebssignal-Erzeugungseinheit (73), die dazu konfiguriert ist, eine Korrelation zwischen dem Bedienungszustand des Vorderradbremsbedienungselements (51) und einem Antriebssignal für den elektrischen Vorderradaktuator (71) zu definieren und auf Basis des Bedienungszustands des Vorderradbremsbedienungselements (51), der durch die Vorderradbremsbedienungszustands-Erfassungseinheit (72) erfasst wird, ein Antriebssignal zum Antreiben des elektrischen Vorderradaktuators (71) zu erzeugen,
wobei die Vorderradantriebssignal-Erzeugungseinheit (73) eine Vorderradkorrelationsänderungseinheit (73b) umfasst, wobei die Vorderradkorrelationsänderungseinheit (73b) dazu konfiguriert ist, die Korrelation zwischen dem Bedienungszustand des Vorderradbremsbedienungselements (51) und dem Antriebssignal für den elektrischen Vorderradaktuator (71) auf Basis eines Signals zu ändern, das durch die externe Eingabeeinheit (74, 84) von der Bedienungsvorrichtung (75, 85), die mit der externen Eingabeeinheit (74, 84) verbunden ist, empfangen wird,
wobei die Hinterradbremshydraulikdruck-Steuereinrichtung (80) Folgendes umfasst:
einen elektrischen Hinterradaktuator (81), der dazu konfiguriert ist, elektrisch angetrieben zu werden, wobei der elektrische Hinterradaktuator (81) an dem Hinterradbremsfluidkanal (63) vorgesehen ist, um einen hydraulischen Bremsdruck zu steuern, der auf den Hinterrad-Radzylinder (43) wirkt,
eine Hinterradbremsbedienungszustands-Erfassungseinheit (82), die dazu konfiguriert ist, einen Bedienungszustand des Hinterradbremsbedienungselements (61) zu erfassen; und
eine Hinterradantriebssignal-Erzeugungseinheit (83), die dazu konfiguriert ist, eine Korrelation zwischen dem Bedienungszustand des Hinterradbremsbedienungselements (61) und einem Antriebssignal für den elektrischen Hinterradaktuator (81) zu definieren und auf Basis des Bedienungszustands des Hinterradbremsbedienungselements (61), der durch die Hinterradbremsbedienungszustands-Erfassungseinheit (82) erfasst wird, ein Antriebssignal zum Antreiben des elektrischen Hinterradaktuators (81) zu erzeugen, und
wobei die Hinterradantriebssignal-Erzeugungseinheit (83) eine Hinterradkorrelationsänderungseinheit (83b) umfasst, wobei die Hinterradkorrelationsmodifizierungseinheit dazu konfiguriert ist, die Korrelation zwischen dem Bedienungszustand des Hinterradbremsbedienungselements (61) und dem Antriebssignal für den elektrischen Hinterradaktuator (81) auf Basis eines Signals zu ändern, das durch die externe Eingabeeinheit (74, 84) von der Bedienungsvorrichtung (75, 85), die mit der externen Eingabeeinheit (74, 84) verbunden ist, empfangen wird.

2. Das rittlings zu fahrende Fahrzeug (1) gemäß Anspruch 1, wobei die Bedienungsvorrichtung (75, 85) mit der externen Eingabeeinheit (74, 84) verbunden ist und auf dem rittlings zu fahrenden Fahrzeug (1) vorgesehen ist,
die Vorderradkorrelationsänderungseinheit (73b) dazu konfiguriert ist, die Korrelation zwischen dem Bedienungszustand des Vorderradbremsbedienungselements (51) und dem Antriebssignal für den elektrischen Vorderradaktuator (71) auf Basis des Signals zu ändern, das durch die externe Eingabeeinheit (74, 84) von der Bedienungsvorrichtung (75, 85) empfangen wird, wobei das Signal auf der Bedienung der Bedienungsvorrichtung (75, 85) durch den Fahrer basiert, und
die Hinterradkorrelationsänderungseinheit (83b) dazu konfiguriert ist, die Korrelation zwischen dem Bedienungszustand des Hinterradbremsbedienungselements (61) und dem Antriebssignal für den elektrischen Hinterradaktuator (81) auf Basis des Signals zu ändern, das durch die externe Eingabeeinheit (74, 84) von der Bedienungsvorrichtung (75, 85) empfangen wird, wobei das Signal auf der Bedienung der Bedienungsvorrichtung (75, 85) durch den Fahrer basiert.

3. Das rittlings zu fahrende Fahrzeug (1) gemäß Anspruch 1, bei dem, wenn die Bedienungsvorrichtung (75, 85) mit der externen Eingabeeinheit (74, 84) verbunden ist, die Vorderradkorrelationsänderungseinheit (73b) dazu konfiguriert ist, die Korrelation zwischen dem Bedienungszustand des Vorderradbremsbedienungselements (51) und dem Antriebssignal für den elektrischen Vorderradaktuator (71) auf Basis der Bedienung der Bedienungsvorrichtung (75, 85) zu ändern,
wenn die Bedienungsvorrichtung (75, 85) nicht mit der externen Eingabeeinheit (74, 84) verbunden ist, die Vorderradantriebssignal-Erzeugungseinheit (73) dazu konfiguriert ist, das Antriebssignal zum Antreiben des elektrischen Vorderradaktuators (71) abhängig von dem Bedienungszustand des Vorderradbremsbedienungselements (51) zu erzeugen, der durch die Vorderradbremsbedienungszustands-Erfassungseinheit (72) erfasst wird, auf Basis der Korrelation, die durch die Vorderradkorrelationsänderungseinheit (73b) geändert wird,
wenn die Bedienungsvorrichtung (75, 85) mit der externen Eingabeeinheit (74, 84) verbunden ist, die Hinterradkorrelationsänderungseinheit (83b) dazu konfiguriert ist, die Korrelation zwischen dem Bedienungszustand des Hinterradbremsbedienungselements (61) und dem Antriebssignal für den elektrischen Hinterradaktuator (81) auf Basis der Bedienung der Bedienungsvorrichtung (75, 85) zu ändern, und
wenn die Bedienungsvorrichtung (75, 85) nicht mit der externen Eingabeeinheit (74, 84) verbunden ist, die Hinterradantriebssignal-Erzeugungseinheit (83) dazu konfiguriert ist, das Antriebssignal zum Antreiben des elektrischen Hinterradaktuators (81) abhängig von dem Bedienungszustand des Hinterradbremsbedienungselements (61) zu erzeugen, der durch die Hinterradbremsbedienungszustands-Erfassungseinheit (82) erfasst wird, auf Basis der Korrelation, die durch die Hinterradkorrelationsänderungseinheit (83b) geändert wird.

4. Das rittlings zu fahrende Fahrzeug (1) gemäß einem der Ansprüche 1 bis 3, wobei die Vorderradbremsbedienungszustands-Erfassungseinheit (72) dazu konfiguriert ist, einen hydraulischen Bremsdruck des Vorderradhauptzylinders zu erfassen, der in dem Vorderradhauptzylinder (52) erzeugt wird, der durch die Bedienung des Vorderradbremsbedienungselements (51) betätigt wird,
wobei die Vorderradantriebssignal-Erzeugungseinheit (73) dazu konfiguriert ist, das Antriebssignal zum Antreiben des elektrischen Vorderradaktuators (71) auf Basis des hydraulischen Bremsdrucks des Vorderradhauptzylinders zu erzeugen, der durch die Vorderradbremsbedienungszustands-Erfassungseinheit (72) erfasst wird,
die Hinterradbremsbedienungszustands-Erfassungseinheit (82) dazu konfiguriert ist, einen hydraulischen Bremsdruck des Hinterradhauptzylinders zu erfassen, der in dem Hinterradhauptzylinder (62) erzeugt wird, der durch die Bedienung des Hinterradbremsbedienungselements (61) betätigt wird, und
die Hinterradantriebssignal-Erzeugungseinheit (83) dazu konfiguriert ist, das Antriebssignal zum Antreiben des elektrischen Hinterradaktuators (81) auf Basis des hydraulischen Bremsdrucks des Hinterradhauptzylinders zu erzeugen, der durch die Hinterradbremsbedienungszustands-Erfassungseinheit (82) erfasst wird.

5. Das rittlings zu fahrende Fahrzeug (1) gemäß einem der Ansprüche 1 bis 4, wobei die Vorderradantriebssignal-Erzeugungseinheit (73) dazu konfiguriert ist, das Antriebssignal zum Antreiben des elektrischen Vorderradaktuators (71) auf Basis von zumindest einer einer Karosseriegeschwindigkeit des Fahrzeugs, einer Fahrzeugstellung oder eines Radschlupfzustands zu erzeugen, sowie auf Basis des Bedienungszustands des Vorderradbremsbedienungselements (51), der durch die Vorderradbremsbedienungszustands-Erfassungseinheit (72) erfasst wird, und
die Hinterradantriebssignal-Erzeugungseinheit (83) dazu konfiguriert ist, das Antriebssignal zum Antreiben des elektrischen Hinterradaktuators (81) auf Basis von zumindest einer einer Karosseriegeschwindigkeit des Fahrzeugs, einer Fahrzeugstellung oder eines Radschlupfzustands zu erzeugen, sowie auf Basis des Bedienungszustands des Hinterradbremsbedienungselements (61), der durch die Hinterradbremsbedienungszustands-Erfassungseinheit (82) erfasst wird.

## Revendications

1. Véhicule à selle (1), comprenant:
un châssis de carrosserie de véhicule (2);
une roue avant (3) et une roue arrière (4) supportées par le châssis de carrosserie de véhicule (2);
un frein de roue avant (30) prévu sur la roue avant (3) et comportant un cylindre de roue avant (33) destiné à générer une force de freinage pour la roue avant (3);
un élément d'actionnement de frein de roue avant (51) pouvant être actionné par un conducteur;
un maître-cylindre de roue avant (52) configuré pour être actionné par un actionnement de l'élément d'actionnement de frein de roue avant (51);
un canal à liquide de frein de roue avant (53) connectant le maître-cylindre de roue avant (52) au cylindre de roue avant (33);
un frein de roue arrière (40) prévu sur la roue arrière (4) et comportant un cylindre de roue arrière (43) destiné à générer une force de freinage pour la roue arrière (4);
un élément d'actionnement de frein de roue arrière (61) pouvant être actionné par le conducteur;
un maître-cylindre de roue arrière (62) configuré pour être actionné par un actionnement de l'élément d'actionnement de frein de roue arrière (61);
un canal à liquide de frein de roue arrière (63) connectant le maître-cylindre de roue arrière (62) au cylindre de roue arrière (43);
une unité d'entrée externe (74, 84), un dispositif d'actionnement (75, 85) pouvant être actionné par une personne et pouvant être connecté à l'unité d'entrée externe (74, 84); et
au moins l'un parmi un dispositif de régulation de pression hydraulique de frein de roue avant (70) et un dispositif de régulation de pression hydraulique de frein de roue arrière (80),
dans lequel le canal à liquide de frein de roue avant (53) est indépendant du canal à liquide de frein de roue arrière (63),
dans lequel le dispositif de régulation de pression hydraulique de frein de roue avant (70) comporte:
un actionneur électrique de roue avant (71) configuré pour être entraîné électriquement, l'actionneur électrique de roue avant (71) étant prévu sur le canal à liquide de frein de roue avant (53) pour commander une pression hydraulique de frein agissant sur le cylindre de roue avant (33);
une unité de détection de condition d'actionnement de frein de roue avant (72) configurée pour détecter une condition d'actionnement de l'élément d'actionnement de frein de roue avant (51); et
une unité de génération de signal d'entraînement de roue avant (73) configurée pour définir une corrélation entre la condition d'actionnement de l'élément d'actionnement de frein de roue avant (51) et un signal d'entraînement pour l'actionneur électrique de roue avant (71) et pour générer, sur base de la condition d'actionnement de l'élément d'actionnement de frein de roue avant (51) détectée par l'unité de détection de condition d'actionnement de frein de roue avant (72), un signal d'entraînement pour entraîner l'actionneur électrique de roue avant (71),
dans lequel l'unité de génération de signal d'entraînement de roue avant (73) comporte une unité de modification de corrélation de roue avant (73b), dans lequel l'unité de modification de corrélation de roue avant (73b) est configurée pour modifier la corrélation entre la condition d'actionnement de l'élément d'actionnement de frein de roue avant (51) et le signal d'entraînement pour l'actionneur électrique de roue avant (71) sur base d'un signal reçu par l'unité d'entrée externe (74, 84) du dispositif d'actionnement (75, 85) connecté à l'unité d'entrée externe (74, 84),
dans lequel le dispositif de régulation de pression hydraulique de frein de roue arrière (80) comporte:
un actionneur électrique de roue arrière (81) configuré pour être entraîné électriquement, l'actionneur électrique de roue arrière (81) étant prévu sur le canal à liquide de frein de roue arrière (63) pour réguler une pression hydraulique de frein agissant sur le cylindre de roue arrière (43),
une unité de détection de condition d'actionnement de frein de roue arrière (82) configurée pour détecter une condition d'actionnement de l'élément d'actionnement de frein de roue arrière (61); et
une unité de génération de signal d'entraînement de roue arrière (83) configurée pour définir une corrélation entre la condition d'actionnement de l'élément d'actionnement de frein de roue arrière (61) et un signal d'entraînement pour l'actionneur électrique de roue arrière (81) et pour générer, sur base de la condition d'actionnement de l'élément d'actionnement de frein de roue arrière (61) détectée par l'unité de détection de condition d'actionnement de frein de roue arrière (82), un signal d'entraînement pour entraîner l'actionneur électrique de roue arrière (81), et
dans lequel l'unité de génération de signal d'entraînement de roue arrière (83) comporte une unité de modification de corrélation de roue arrière (83b), dans lequel l'unité de modification de corrélation de roue arrière est configurée pour modifier la corrélation entre la condition d'actionnement de l'élément d'actionnement de frein de roue arrière (61) et le signal d'entraînement pour l'actionneur électrique de roue arrière (81) sur base d'un signal reçu par l'unité d'entrée externe (74, 84) du dispositif d'actionnement (75, 85) connecté à l'unité d'entrée externe (74, 84).

2. Véhicule à selle (1) selon la revendication 1, dans lequel le dispositif d'actionnement (75, 85) est connecté à l'unité d'entrée externe (74, 84) et prévu sur le véhicule à selle (1),
l'unité de modification de corrélation de roue avant (73b) est configurée pour modifier la corrélation entre la condition d'actionnement de l'élément d'actionnement de frein de roue avant (51) et le signal d'entraînement pour l'actionneur électrique de roue avant (71) sur base du signal reçu par l'unité d'entrée externe (74, 84) du dispositif d'actionnement (75, 85), le signal étant basé sur l'actionnement du dispositif d'actionnement (75, 85) par le conducteur, et
l'unité de modification de corrélation de roue arrière (83b) est configurée pour modifier la corrélation entre la condition d'actionnement de l'élément d'actionnement de frein de roue arrière (61) et le signal d'entraînement pour l'actionneur électrique de roue arrière (81) sur base du signal reçu par l'unité d'entrée externe (74, 84) du dispositif d'actionnement (75, 85), le signal étant basé sur l'actionnement du dispositif d'actionnement (75, 85) par le conducteur.

3. Véhicule à selle (1) selon la revendication 1, dans lequel, lorsque le dispositif d'actionnement (75, 85) est connecté à l'unité d'entrée externe (74, 84), l'unité de modification de corrélation de roue avant (73b) est configurée pour modifier la corrélation entre la condition d'actionnement de l'élément d'actionnement de frein de roue avant (51) et le signal d'entraînement pour l'actionneur électrique de roue avant (71) sur base de l'actionnement du dispositif d'actionnement (75, 85),
lorsque le dispositif d'actionnement (75, 85) n'est pas connecté à l'unité d'entrée externe (74, 84), l'unité de génération de signal d'entraînement de roue avant (73) est configurée pour générer le signal d'entraînement pour entraîner l'actionneur électrique de roue avant (71) en fonction de la condition d'actionnement de l'élément d'actionnement de frein de roue avant (51) détectée par l'unité de détection de condition d'actionnement de frein de roue avant (72) sur base de la corrélation modifiée par l'unité de modification de corrélation de roue avant (73b),
lorsque le dispositif d'actionnement (75, 85) est connecté à l'unité d'entrée externe (74, 84), l'unité de modification de corrélation de roue arrière (83b) est configurée pour modifier la corrélation entre la condition d'actionnement de l'élément d'actionnement de frein de roue arrière (61) et le signal d'entraînement pour l'actionneur électrique de roue arrière (81) sur base de l'actionnement du dispositif d'actionnement (75, 85), et
lorsque le dispositif d'actionnement (75, 85) n'est pas connecté à l'unité d'entrée externe (74, 84), l'unité de génération de signal d'entraînement de roue arrière (83) est configurée pour générer le signal d'entraînement pour entraîner l'actionneur électrique de roue arrière (81) en fonction de la condition d'actionnement de l'élément d'actionnement de frein de roue arrière (61) détectée par l'unité de détection de condition d'actionnement de frein de roue arrière (82) sur base de la corrélation modifiée par l'unité de modification de corrélation de roue arrière (83b).

4. Véhicule à selle (1) selon l'une quelconque des revendications 1 à 3, dans lequel l'unité de détection de condition d'actionnement de frein de roue avant (72) est configurée pour détecter une pression hydraulique de frein de maître-cylindre de roue avant générée dans le maître-cylindre de roue avant (52) actionné par l'actionnement de l'élément d'actionnement de frein de roue avant (51),
l'unité de génération de signal d'entraînement de roue avant (73) est configurée pour générer le signal d'entraînement pour entraîner l'actionneur électrique de roue avant (71) sur base de la pression hydraulique de frein de maître-cylindre de roue avant détectée par l'unité de détection de condition d'actionnement de frein de roue avant (72),
l'unité de détection de condition d'actionnement de frein de roue arrière (82) est configurée pour détecter une pression hydraulique de frein de maître-cylindre de roue arrière générée dans le maître-cylindre de roue arrière (62) actionné par l'actionnement de l'élément d'actionnement de frein de roue arrière (61), et
l'unité de génération de signal d'entraînement de roue arrière (83) est configurée pour générer le signal d'entraînement pour entraîner l'actionneur électrique de roue arrière (81) sur base de la pression hydraulique de frein du maître-cylindre de roue arrière détectée par l'unité de détection de condition d'actionnement de frein de roue arrière (82).

5. Véhicule à selle (1) selon l'une quelconque des revendications 1 à 4, dans lequel l'unité de génération de signal d'entraînement de roue avant (73) est configurée pour générer le signal d'entraînement pour entraîner l'actionneur électrique de roue avant (71) sur base d'au moins l'une parmi une vitesse de carrosserie de véhicule, une posture de véhicule ou une condition de patinage de roue, et de la condition d'actionnement de l'élément d'actionnement de frein de roue avant (51) détectée par l'unité de détection de condition d'actionnement de frein de roue avant (72), et
l'unité de génération de signal d'entraînement de roue arrière (83) est configurée pour générer le signal d'entraînement pour entraîner l'actionneur électrique de roue arrière (81) sur base d'au moins l'une parmi une vitesse de carrosserie de véhicule, une posture de véhicule ou une condition de patinage de roue, et de la condition d'actionnement de l'élément d'actionnement de frein de roue arrière (61) détectée par l'unité de détection de condition d'actionnement de frein de roue arrière (82).
